# EUROPEAN PATENT SPECIFICATION

(11) **EP 3 983 998 B1**
(45) Date of publication and mention of the grant of the patent: **07.01.2026**
(21) Application number: 20821699.4
(22) Date of filing: 27.03.2020
(51) Int. Cl.: G06T 7/80

(54) **METHOD AND SYSTEM FOR EXTRINSIC CAMERA CALIBRATION**
VERFAHREN UND SYSTEM ZUR EXTRINSISCHEN KAMERAKALIBRIERUNG
PROCÉDÉ ET SYSTÈME POUR L'ÉTALONNAGE EXTRINSÈQUE D'UNE CAMÉRA

(30) Priority: 14.06.2019 CA 3046609
(43) Date of publication of application: 20.04.2022
(73) Proprietor: Hinge Health, Inc., San Francisco, California 94105 (US)
(72) Inventor: ZHANG, Wen, Montreal, Québec H4Z 2Z6 (CA)
(74) Representative: Keltie LLP
(86) International application number: PCT/IB2020/052938
(87) International publication number: WO 2020/250047

(56) References cited:
- WO-A1-2017/062177
- US-A1- 2015 288 951
- US-A1- 2017 098 305
- US-A1- 2018 357 509
- DOUXCHAMPS D ET AL: "High-Accuracy and Robust Localization of Large Control Markers for Geometric Camera Calibration", IEEE TRANSACTIONS ON PATTERN ANALYSIS AND MACHINE INTELLIGENCE, IEEE COMPUTER SOCIETY, USA, vol. 31, no. 2, 1 February 2009 (2009-02-01), pages 376 - 383, XP011233813, ISSN: 0162-8828, DOI: 10.1109/TPAMI.2008.214

## Description

### FIELD

This disclosure relates to methods and systems for determining a camera's extrinsic parameters. In particular, the disclosure relates to the determination of a camera's six degree-of-freedom pose using image features.

### BACKGROUND

A method for determining a camera's location uses fiducial markers with specialized designs from which known features can be extracted. For example, this can be done with QR-code-like markers or a checkboard pattern. Another method for determining a camera's location does not require any markers but instead employs a moving camera to map a scene and estimate the poses concurrently. An example of this latter method is visual simultaneous localization and mapping (VSLAM).

Damien Douxchamps et al., "High-Accuracy and Robust Localization of Large Control Markers for Geometric Camera Calibration", IEEE Transactions on Pattern Analysis and Machine Intelligence, IEEE Computer Society, USA, vol. 31, no. 2, 1 February 2009, pages 376 - 383, ISSN: 0162-8828, DOI: 10.1109/TPAMI.2008.214 discloses camera calibration from markers based on synthetic images using a standard pinhole camera model. A 3D model of the markers is ray-traced iteratively.

WO 2017/062177 A1 discloses pinhole camera calibration using a planar calibration pattern and comparing a synthetic image to an actual image.

In the case where specialized markers are not desirable (e.g. for esthetic reasons) and it is not possible to move the camera, it may be useful to have a system that can calibrate the camera from a static viewpoint by capturing some known arbitrary graphic pattern.

### SUMMARY

The invention is defined in independent computer-implemented method claim 1 and device claim 8.

### BRIEF DESCRIPTION OF THE DRAWINGS

In drawings which illustrate by way of example only a preferred embodiment of the disclosure,
Figure 1 is a representation of the high-level architecture of an embodiment of the camera calibration system.
Figure 2 is an example representation of synthetic views of a calibration image using virtual camera parameters.
Figure 3 is a series of example representations of feature correspondences between the captured image and synthetic views.

### DETAILED DESCRIPTION

This disclosure is directed to a camera calibration method and system for computing extrinsic camera parameters. A calibration image of arbitrary but asymmetric design may be embedded onto or printed on a substantially planar surface visible to the camera being calibrated. A synthetic pattern generator may produce synthetic views of the calibration image with virtual camera parameters. A feature detection and matching module may correlate 2D points in the captured image with virtual 3D points in the synthetic views. A calibration solver may then compute the extrinsic parameters from the 2D-3D correspondences.

The extrinsic parameters of a camera are typically composed of a translation component t = (X, Y, Z) and a rotation component R. In 3-space, the former may be represented as a 3-vector and the latter may be represented as a vector of Euler angles. The rotation component may alternatively be represented as a 3x3 rotation matrix, an angle-axis vector, or similar. Extrinsic calibration is the process of obtaining R and t. Intrinsic parameters of a camera are generally known from the camera and may include the field of view, focal length, and any lens distortion. Some intrinsic parameters may be changeable based on settings on the camera, such as focal length on a zoom lens but assumed to be known for the purposes of the calibration.

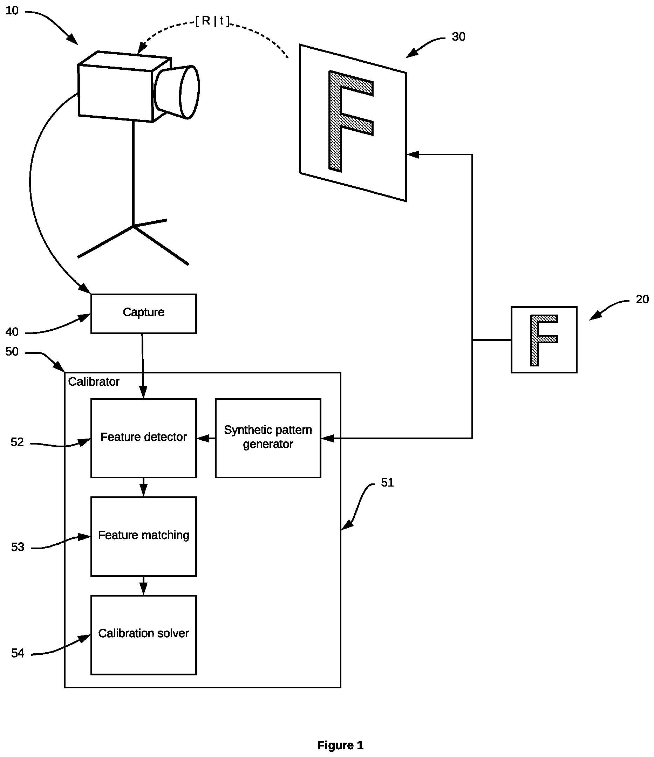

With reference to Figure 1, a calibration system comprises a camera to be calibrated 10, a digital calibration image 20, a physical planar calibration pattern 30, an image capture module 40, and a calibration module 50. The calibration module may contain a synthetic pattern generator 51, a feature detector 52, a feature matching module 53 and a calibration solver 54.

The digital calibration image 20 may be of arbitrary design, although preferably with an asymmetry along at least one axis. The asymmetry may assist with avoiding ambiguous solutions. This digital calibration image 20 may be embedded on a plane with a known physical size to comprise the planar calibration pattern 30. Example embodiments include a flat moveable board with the printed design or a surface such as a wall or floor with a pasted decal. An embodiment may use one or more of these planar calibration patterns, with the requirement that each pattern contains a distinct design. The digital calibration image 20 and therefore the planar calibration pattern 30 may be a logo, background image or other design that may already normally appear in the camera's 10 field of view.

The image capture module 40 may convert a video signal from a video source into data suitable for digital image processing. The video source may be a digital camera or some other stream of video such as a video stream over the internet. The image capture module may provide an application programming interface, such as from a camera manufacturer of the camera 10 or a third-party software library.

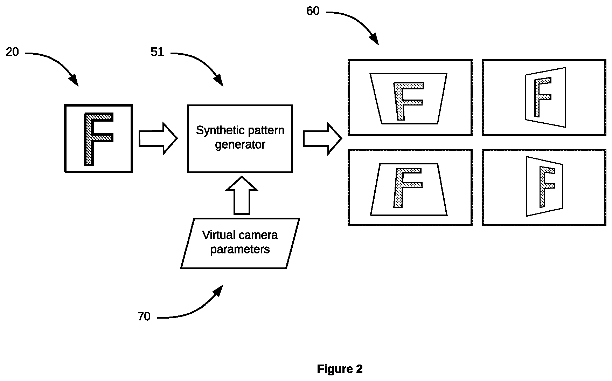

With reference to Figure 2, the synthetic pattern generator module 51 may accept the digital calibration image 20 as an input and produces synthetic views 60. The synthetic pattern generator leverages existing 3D rendering frameworks such as OpenGL (or DirectX, Unity3D, Unreal, etc.) to render the digital calibration image into different synthetic views. A synthetic view may be an image that depicts the planar calibration pattern 20 under some camera projective transform. This projective transform of the virtual camera may be calculated from virtual camera parameters 70. The virtual camera parameters are sets of translation and rotation coordinates for the virtual camera relative to the planar calibration pattern 20. These virtual camera parameters may be used to map any 2D image coordinate in the synthetic view to a 3D position on the calibration pattern and vice versa.

Multiple synthetic views may be generated so that more candidate feature points are available to the feature detection module. Having additional synthetic views may allow for additional sets of features. The feature extraction algorithm may not be invariant to changes in perspective, and therefore may produce different features from different viewing angles. Synthetic views may be generated by choosing virtual camera parameters such that the intrinsic parameters mirror the known camera intrinsic parameters. Extrinsic parameters may be selected from a space of translations and rotations where the calibration pattern is contained in the synthetic field of view. Synthetic views may be selected evenly from the space, or may be selected based on information on common positions of a camera. In one example embodiment, nine synthetic views evenly cover the hemisphere in front of the calibration pattern while keeping the virtual cameras' local y-axis approximately aligned with the world's y-axis. These synthetic views may correspond to common camera positions with both the camera and calibration pattern mounted relative to the same horizontal orientation. In another example, synthetic views may be selected from camera locations known a priori or from commonly used positions where the camera is generally in front of the calibration pattern rather than at a highly oblique angle.

The feature detection module may comprise two sub-modules: a feature extraction module, and a feature matching module. A feature in this context may be a patch of image that can be identified by an accompanying descriptor. The descriptor may be an encoding of the salient patch information in a lower-dimensional space (for example, an N-D vector), that allows for some kind of similarity measure between patches, for example the L2 norm of the difference between two descriptors. The feature extractor module may find features in the synthetic views and in the captured image. An embodiment may use any algorithm that identifies features in a fashion invariant to scaling and rotation, such as Speeded Up Robust Features (SURF) or Maximally Stable Extremal Regions (MSER).

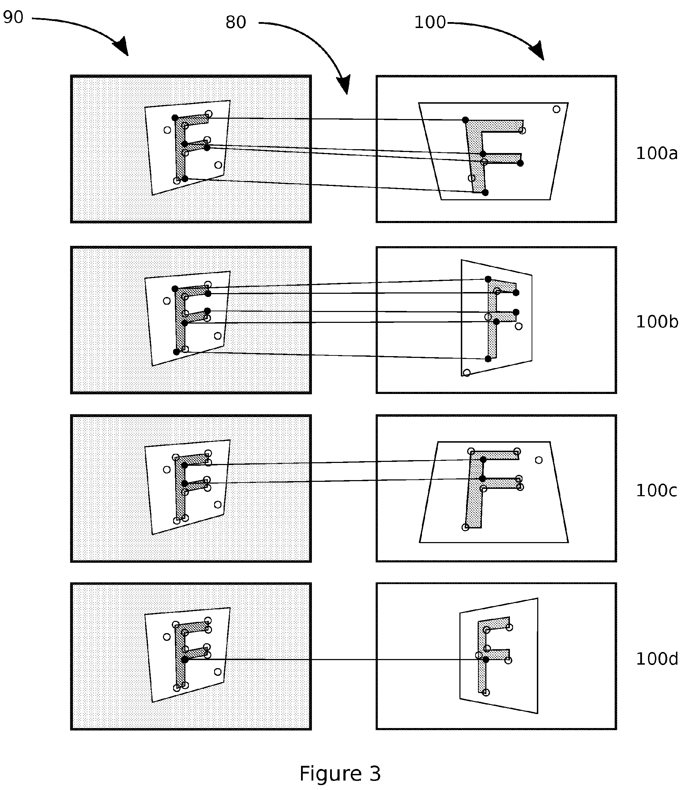

With reference to Figure 3, the feature matching module finds a set of correspondences 80 between features extracted from the captured image 90 and features extracted from each synthetic view 100. In one embodiment, the matches may be obtained through brute-force. For a particular feature from the captured image, the module iterates through all the features from a synthetic view and compute the cost, or similarity, for each pair. The feature from a synthetic view with the lowest cost is selected as a potential match. To reduce instances of false matches, the potential matching feature from a synthetic view is compared to each feature from the captured image, and the lowest cost feature from the captured image is selected as the cross-check feature. The match is accepted if the feature from the captured image under consideration is the same feature as the cross-check feature and rejected if it is not. This process is repeated for each captured feature and for each synthetic view.

With reference again to the example of Figure 3, example features are denoted by circles. Example matches are denoted by lines connecting solid circles. A particular feature may be the bottom right corner of the "F" as identified by the feature detection module. This feature in the captured image 90 is compared to all the features in the first synthetic view 100a, and the match with the lowest cost is selected, in this case. The selected feature from synthetic view 100a is then compared to each feature in the captured image and the match with the lowest cost is selected as the cross-check. In this example, the cross-check feature is also the bottom right corner of the "F", so the match is accepted, as indicated by the line connecting the solid circles of the captured image 90 and the first synthetic view 100. This is repeated for each of the features of the captured image as against the features of the first synthetic view 100a. In this case, three other matches were found.

This process is then repeated for rest of the synthetic views 100a-100d. With the features from synthetic view 100b, five matches were found; with the features from synthetic view 100c, two matches were found and one match found in synthetic view 100d. In this example, no additional matches are made for a particular feature of the bottom right corner of the "F". In this example, for each synthetic view, there were a number of features which were not matched.

In addition to matching by feature descriptor, the feature matching module may be made robust to false matches by enforcing a homography (3x3 matrix that relates points on a plane undergoing a perspective transformation). The homography may be obtained with an outlier-rejecting method such as Random Sampling Consensus (RANSAC).

To further increase the robustness of the matches, an embodiment of the feature matcher may consider only those matches that are contained within a region of interest (ROI) in the captured image. The region of interest may be represented as a bounding box or as a 2D contour. This ROI may be obtained from an initial guess based on "a priori" knowledge, or from a provisional estimate of the extrinsic parameters obtained without the ROI. In the latter case, an ROI may be obtained by projecting the contour of the extents of the calibration image using the provisional extrinsic parameters.

The calibration solver 54 may take as inputs the set of feature matches and the virtual camera parameters associated with all synthetic views. For each matching feature, it may first obtain the 2D image coordinate of the feature in the captured image. For the same matching feature, it may then compute the virtual 3D coordinate from the 2D image coordinate in the synthetic view the feature originated via the projective transform of the virtual camera. This virtual 3D coordinate mirrors a point on the planar calibration pattern; thus, it can be considered a real-world 3D coordinate.

From a set of 2D (captured) to 3D (world) point correspondences, the calibration solver 54 may compute an estimate of the extrinsic parameters R and t. This is known as the "perspective n-points" problem and in most cases, this problem is over-determined. An embodiment may use a method that minimizes the reprojection error, such as Levenberg-Marquandt optimization. Alternatively, an embodiment may use a RANSAC approach that samples subsets of 4 points and use a direct solution such as EPnP at each iteration.

In one possible embodiment, the features of the synthetic views may be precomputed at the time the calibration image is selected. In this case, the synthetic pattern generation and feature extraction step may happen "offline", in advance of the camera calibration. Once the synthetic features are computed, the calibration image can be discarded. During the camera calibration procedure, the camera's intrinsic parameters, the precomputed synthetic features and the captured image may be used for the calibration proceeding from the feature matching module 53.

In one embodiment, each of the feature detector module 52, feature matching module 53, synthetic pattern generator 51 and calibration solver 54 may each provided with at least one respective processor or processing unit, a respective communication unit and a respective memory. In another embodiment, at least two of the group consisting of the feature detector 52, feature matching 54, synthetic pattern generator 51 and calibration solver 54 share a same processor, a same communication and/or a same memory. In this case, the feature detector module 52, feature matching module 54, synthetic pattern generator 51 and/or calibration solver 54 may correspond to different modules executed by the processor of a computer machine such as a server. personal computer, a laptop, a tablet, a smart phone, etc.

A calibration module may include one or more Computer Processing Units (CPUs) and/or Graphic Processing Units (GPUs) for executing modules or programs and/or instructions stored in memory and thereby performing processing operations, memory, and one or more communication buses for interconnecting these components. The communication buses optionally include circuitry (sometimes called a chipset) that interconnects and controls communications between system components. The memory includes high-speed random access memory, such as DRAM, SRAM, DDR RAM or other random access solid state memory devices, and may include non-volatile memory, such as one or more magnetic disk storage devices, optical disk storage devices, flash memory devices, or other non-volatile solid state storage devices. The memory optionally includes one or more storage devices remotely located from the CPU(s). The memory, or alternately the non-volatile memory device(s) within the memory, comprises a non-transitory computer readable storage medium. In some embodiments, the memory, or the computer readable storage medium of the memory stores the programs, modules, and data structures, or a subset described above.

Each of the elements may be stored in one or more of the previously mentioned memory devices, and corresponds to a set of instructions for performing functions described above. The above identified modules or programs (i.e., sets of instructions) need not be implemented as separate software programs, procedures or modules, and thus various subsets of these modules may be combined or otherwise re-arranged in various embodiments. In some embodiments, the memory may store a subset of the modules and data structures identified above. Furthermore, the memory may store additional modules and data structures not described above.

In an embodiment, a calibration system may be integrated with and/or attached to a moveable camera system. As described above, the calibration system may determine the location and direction, i.e. the translation and rotation, of the camera. This determination may be done in real time, or near real time, as the camera is operated. The camera may be hand held or positioned on a dolly or tripod. The camera translation and rotation may be included with the captured images or video, such as embedded metadata. The translation and rotation information may be provided to other systems that handle or receive the output from the camera, such as for image or video recognition systems, virtual reality systems.

Various embodiments of the present disclosure having been thus described in detail by way of example, it will be apparent to those skilled in the art that variations and modifications may be made without departing from the disclosure. The disclosure includes all such variations and modifications as fall within the scope of the appended claims.

## Claims

1. A computer-implemented method of determining extrinsic parameters of a camera (10),
the method comprising:
obtaining a digital calibration image (20);
generating a plurality of synthetic views (60,100) of the digital calibration image (20) using a three-dimensional 3D rendering framework, each synthetic view having a set of virtual camera parameters (70);
identifying a set of features from each of the plurality of synthetic views (60,100);
obtaining a digital camera image of a representation of the digital calibration image (20);
identifying the set of features in the digital camera image;
finding correspondences (80) by comparing each feature in the set of features of the digital camera image with each feature in each of the set of features of the synthetic views (60,100);
for each feature of the set of features of the digital camera image,
identifying a best match by selecting, from among the features of the set of features of the synthetic views (60,100), a first feature determined to have a highest similarity;
comparing the first feature against each feature in the set of features of the digital camera image, so as to identify a second feature having a highest similarity as a cross-check feature; and
accepting the first feature as the best match in response to a determination that the first feature is the same as the second feature; and
calculating the extrinsic parameters of the camera (10) using the virtual camera parameters (70) of the features associated with the best matches.

2. The method of claim 1, wherein the digital calibration image (20) is asymmetric in at least one dimension.

3. The method of claim 1, wherein the extrinsic parameters and the virtual camera parameters (70) comprise translation and rotation coordinates for a corresponding virtual camera relative to a planar calibration pattern.

4. The method of claim 1, wherein the plurality of synthetic views (60,100) are selected from a space of virtual camera parameters (70) where the calibration image is within a field of view of the synthetic view.

5. The method of claim 1, wherein identifying a set of features from each of the plurality of synthetic views (60,100) and identifying the set of features in the digital camera image is performed using a feature detection module.

6. The method of claim 1, wherein identifying best matches comprises computing the elementwise difference between each feature and minimizing this difference for both the synthetic view to captured image and captured image to synthetic view.

7. The method of claim 1, further comprising identifying a region of interest of the digital camera image, and wherein identifying the set of features in the digital camera image is performed only on the region of interest.

8. A camera calibration module (50) for determining the translation and rotation of a camera (10) using a physical planar calibration pattern (30), the camera calibration module (50) comprising:
a synthetic pattern generator (51) for generating a plurality of synthetic views (60,100) of a digital calibration image (20) corresponding to the physical planar calibration pattern (30);
a feature detector (52) for extracting a set of features from an image captured from the camera (10) and from each of the plurality of synthetic views (60, 100);
a feature matching module (53) for finding correspondences (80) by comparing each feature in the set of features of the digital camera image, with each feature in each of the set of features of the synthetic views (60, 100),
for each feature of the set of features of the digital camera image,
identifying a best match by selecting, from among the features of the set of features of the synthetic views (60,100), a first feature determined to have a highest similarity;
comparing the first feature against each feature in the set of features of the digital camera image, so as to identify a second feature having a highest similarity as a cross-check feature; and
accepting the first feature as the best match in response to a determination that the first feature is the same as the second feature; and
a calibration solver (54) for calculating the translation and rotation of the camera (10) using virtual camera parameters (70) of the features associated with the best matches.

9. The camera calibration module (50) of claim 8, wherein the digital calibration image (20) is asymmetric in at least one dimension.

10. The camera calibration module (50) of claim 8, wherein the extrinsic parameters and the virtual camera parameters (70) comprise translation and rotation coordinates.

11. The camera calibration module (50) of claim 8, wherein the plurality of synthetic views (60,100) are selected from a space of virtual camera parameters (70) where the calibration image is within a field of view of the synthetic view.

12. The camera calibration module (50) of claim 8, wherein the feature matching module (53) is configured to identify a best match by computing the elementwise difference between each feature and minimizing this difference for both the synthetic view to captured image and captured image to synthetic view.

13. The camera calibration module (50) of claim 8, wherein identifying the set of features in the digital camera image is performed only on a region of interest of the digital camera image.

14. A camera calibration system comprising:
the camera calibration module (50) of claim 8;
the camera (10); and
the physical planar calibration pattern (30);
wherein output from the camera is embedded with the translation and rotation of the camera (10).

## Patentansprüche

1. Computerimplementiertes Verfahren zum Bestimmen extrinsischer Parameter einer Kamera (10), wobei das Verfahren umfasst:
Abrufen eines digitalen Kalibrierungsbilds (20);
Erzeugen einer Vielzahl synthetischer Ansichten (60, 100) des digitalen Kalibrierungsbilds (20) mittels eines dreidimensionalen 3D-Renderingrahmens, wobei jede synthetische Ansicht einen Satz virtueller Kameraparameter (70) aufweist;
Identifizieren eines Satzes von Merkmalen aus jeder der Vielzahl synthetischer Ansichten (60, 100);
Abrufen eines digitalen Kamerabilds einer Darstellung des digitalen Kalibrierungsbilds (20);
Identifizieren des Satzes von Merkmalen in dem digitalen Kamerabild;
Suchen nach Übereinstimmungen (80), indem jedes Merkmal in dem Satz von Merkmalen des digitalen Kamerabilds mit jedem Merkmal in jedem des Satzes von Merkmalen der synthetischen Ansichten (60, 100) verglichen wird;
für jedes Merkmal des Satzes von Merkmalen des digitalen Kamerabilds,
Identifizieren einer besten Übereinstimmung, indem aus den Merkmalen des Satzes von Merkmalen der synthetischen Ansichten (60, 100) ein erstes Merkmal ausgewählt wird, bei dem eine höchste Ähnlichkeit bestimmt wurde;
Vergleichen des ersten Merkmals mit jedem Merkmal in dem Satz von Merkmalen des digitalen Kamerabilds, um ein zweites Merkmal mit einer höchsten Ähnlichkeit als Überprüfungsmerkmal zu identifizieren; und
Akzeptieren des ersten Merkmals als beste Übereinstimmung infolge einer Bestimmung, dass das erste Merkmal mit dem zweiten Merkmal übereinstimmt; und
Berechnen der extrinsischen Parameter der Kamera (10) mittels der virtuellen Kameraparameter (70) der Merkmale, die den besten Übereinstimmungen zugeordnet sind.

2. Verfahren nach Anspruch 1, wobei das digitale Kalibrierungsbild (20) in mindestens einer Dimension asymmetrisch ist.

3. Verfahren nach Anspruch 1, wobei die extrinsischen Parameter und die virtuellen Kameraparameter (70) Translations- und Rotationskoordinaten für eine entsprechende virtuelle Kamera relativ zu einem planaren Kalibrierungsmuster umfassen.

4. Verfahren nach Anspruch 1, wobei die Vielzahl synthetischer Ansichten (60, 100) aus einem Bereich virtueller Kameraparameter (70) ausgewählt wird, wobei sich das Kalibrierungsbild innerhalb eines Sichtfelds der synthetischen Ansicht befindet.

5. Verfahren nach Anspruch 1, wobei das Identifizieren eines Satzes von Merkmalen aus jeder der Vielzahl synthetischer Ansichten (60, 100) und das Identifizieren eines Satzes von Merkmalen in dem digitalen Kamerabild mittels eines Merkmalserkennungsmoduls durchgeführt wird.

6. Verfahren nach Anspruch 1, wobei das Identifizieren der besten Übereinstimmungen das Berechnen der elementweisen Differenz zwischen jedem Merkmal und das Minimieren dieser Differenz für sowohl die synthetische Ansicht zum erfassten Bild als auch für das erfasste Bild zur synthetischen Ansicht umfasst.

7. Verfahren nach Anspruch 1, ferner umfassend das Identifizieren eines Bereichs von Interesse im digitalen Kamerabild, und wobei das Identifizieren des Satzes von Merkmalen in dem digitalen Kamerabild nur in dem Bereich von Interesse durchgeführt wird.

8. Kamerakalibrierungsmodul (50) zum Bestimmen der Translation und Rotation einer Kamera (10) mittels eines physikalischen planaren Kalibrierungsmusters (30), wobei das Kamerakalibrierungsmodul (50) umfasst:
einen Erzeuger synthetischer Muster (51) zum Erzeugen einer Vielzahl synthetischer Ansichten (60, 100) eines digitalen Kalibrierungsbilds (20) entsprechend dem physikalischen planaren Kalibrierungsmuster (30);
einen Merkmalserkenner (52) zum Extrahieren eines Satzes von Merkmalen aus einem Bild, das über die Kamera (10) und über jede der Vielzahl synthetischer Ansichten (60, 100) erfasst wurde;
ein Merkmalsabgleichmodul (53) zum Suchen nach Übereinstimmungen (80), indem jedes Merkmal in dem Satz von Merkmalen des digitalen Kamerabilds mit jedem Merkmal in jedem des Satzes von Merkmalen der synthetischen Ansichten (60, 100) verglichen wird,
für jedes Merkmal des Satzes von Merkmalen des digitalen Kamerabilds,
Identifizieren einer besten Übereinstimmung, indem aus den Merkmalen des Satzes von Merkmalen der synthetischen Ansichten (60, 100) ein erstes Merkmal ausgewählt wird, bei dem eine höchste Ähnlichkeit bestimmt wurde;
Vergleichen des ersten Merkmals mit jedem Merkmal in dem Satz von Merkmalen des digitalen Kamerabilds, um ein zweites Merkmal mit einer höchsten Ähnlichkeit als Überprüfungsmerkmal zu identifizieren; und
Akzeptieren des ersten Merkmals als beste Übereinstimmung infolge einer Bestimmung, dass das erste Merkmal mit dem zweiten Merkmal übereinstimmt; und
ein Kalibrierungslöser (54) zum Berechnen der Translation und Rotation der Kamera (10) mittels virtueller Kameraparameter (70) der Merkmale, die den besten Übereinstimmungen zugeordnet sind.

9. Kamerakalibrierungsmodul (50) nach Anspruch 8, wobei das digitale Kalibrierungsbild (20) in mindestens einer Dimension asymmetrisch ist.

10. Kamerakalibrierungsmodul (50) nach Anspruch 8, wobei die extrinsischen Parameter und die virtuellen Kameraparameter (70) Translations- und Rotationskoordinaten umfassen.

11. Kamerakalibrierungsmodul (50) nach Anspruch 8, wobei die Vielzahl synthetischer Ansichten (60, 100) aus einem Bereich virtueller Kameraparameter (70) ausgewählt wird, wobei sich das Kalibrierungsbild innerhalb eines Sichtfelds der synthetischen Ansicht befindet.

12. Kamerakalibrierungsmodul (50) nach Anspruch 8, wobei das Merkmalsabgleichmodul (53) zum Identifizieren einer besten Übereinstimmung konfiguriert ist, indem die elementweise Differenz zwischen jedem Merkmal berechnet und diese Differenz für sowohl die synthetische Ansicht zum erfassten Bild als auch für das erfasste Bild zur synthetischen Ansicht minimiert wird.

13. Kamerakalibrierungsmodul (50) nach Anspruch 8, wobei das Identifizieren des Satzes von Merkmalen in dem digitalen Kamerabild nur in einem Bereich von Interesse im digitalen Kamerabild durchgeführt wird.

14. Kamerakalibrierungssystem, umfassend:
das Kamerakalibrierungsmodul (50) nach Anspruch 8;
die Kamera (10); und
das physikalische planare Kalibrierungsmuster (30);
wobei die Ausgabe von der Kamera in die Translation und Rotation der Kamera (10) eingebettet ist.

## Revendications

1. Procédé informatisé de détermination de paramètres extrinsèques d'une caméra (10), le procédé comprenant :
l'obtention d'une image d'étalonnage numérique (20) ;
la génération d'une pluralité de vues synthétiques (60, 100) de l'image d'étalonnage numérique (20) à l'aide d'un cadre de rendu tridimensionnel 3D, chaque vue synthétique possédant un ensemble de paramètres de caméra virtuelle (70) ;
l'identification d'un ensemble de caractéristiques d'après chacune de la pluralité de vues synthétiques (60, 100) ;
l'obtention d'une image de caméra numérique d'une représentation de l'image d'étalonnage numérique (20) ;
l'identification de l'ensemble de caractéristiques dans l'image de la caméra numérique ;
l'établissement de correspondances (80) en comparant chaque caractéristique de l'ensemble de caractéristiques de l'image de la caméra numérique avec chaque caractéristique de chacune de l'ensemble de caractéristiques des vues synthétiques (60, 100) ;
pour chaque caractéristique de l'ensemble de caractéristiques de l'image de la caméra numérique,
l'identification d'une meilleure correspondance en sélectionnant, parmi les caractéristiques de l'ensemble de caractéristiques des vues synthétiques (60, 100), une première caractéristique établie comme présentant une similitude la plus élevée ;
la comparaison de la première caractéristique avec chaque caractéristique de l'ensemble de caractéristiques de l'image de la caméra numérique, de façon à identifier une deuxième caractéristique présentant une similitude la plus élevée, en tant que caractéristique de vérification par recoupement ; et
l'acceptation de la première caractéristique comme correspondant le mieux, en réponse à une détermination selon laquelle la première caractéristique est la même que la deuxième caractéristique ; et
le calcul des paramètres extrinsèques de la caméra (10) à l'aide des paramètres de caméra virtuelle (70) des caractéristiques associées aux meilleures correspondances.

2. Procédé selon la revendication 1, l'image d'étalonnage numérique (20) étant asymétrique dans au moins une dimension.

3. Procédé selon la revendication 1, les paramètres extrinsèques et les paramètres de caméra virtuelle (70) comprenant des coordonnées de translation et de rotation d'une caméra virtuelle correspondante relativement à un motif d'étalonnage planaire.

4. Procédé selon la revendication 1, la pluralité de vues synthétiques (60, 100) étant sélectionnée dans un espace de paramètres de caméra virtuelle (70), où l'image d'étalonnage se trouve au sein d'un champ de vue de la vue synthétique.

5. Procédé selon la revendication 1, l'identification d'un ensemble de caractéristiques d'après chacune de la pluralité de vues synthétiques (60, 100), et l'identification de l'ensemble de caractéristiques dans l'image de la caméra numérique étant effectuées à l'aide d'un module de détection des caractéristiques.

6. Procédé selon la revendication 1, l'identification des meilleures correspondances comprenant le calcul de la différence par éléments entre chaque caractéristique et la minimisation de cette différence à la fois pour la vue synthétique sur l'image capturée et pour l'image capturée sur la vue synthétique.

7. Procédé selon la revendication 1, comprenant en outre l'identification d'une zone d'intérêt de l'image de la caméra numérique, et l'identification de l'ensemble de caractéristiques de l'image de la caméra numérique étant effectuée uniquement sur la zone d'intérêt.

8. Module d'étalonnage de caméra (50) pour déterminer la translation et la rotation d'une caméra (10) à l'aide d'un motif d'étalonnage planaire physique (30), le module d'étalonnage de caméra (50) comprenant :
un générateur de motifs synthétiques (51) pour générer une pluralité de vues synthétiques (60, 100) d'une image d'étalonnage numérique (20) correspondant au motif d'étalonnage planaire physique (30) ;
un détecteur de caractéristiques (52) pour extraire un ensemble de caractéristiques d'une image capturée de la caméra (10) et de chacune de la pluralité de vues synthétiques (60, 100) ;
un module de correspondance des caractéristiques (53) pour établir des correspondances (80) en comparant chaque caractéristique de l'ensemble de caractéristiques de l'image de la caméra numérique avec chaque caractéristique dans chacune de l'ensemble de caractéristiques des vues synthétiques (60, 100),
pour chaque caractéristique de l'ensemble de caractéristiques de l'image de la caméra numérique,
l'identification d'une meilleure correspondance en sélectionnant, parmi les caractéristiques de l'ensemble de caractéristiques des vues synthétiques (60, 100), une première caractéristique déterminée comme présentant une similitude la plus élevée ;
la comparaison de la première caractéristique avec chaque caractéristique de l'ensemble de caractéristiques de l'image de la caméra numérique, de façon à identifier une deuxième caractéristique présentant une similitude la plus élevée en tant que caractéristique de vérification par recoupement ; et
l'acceptation de la première caractéristique comme étant la meilleure correspondance en réponse à une détermination selon laquelle la première caractéristique est la même que la deuxième caractéristique ; et
un solutionneur d'étalonnage (54) pour calculer la translation et la rotation de la caméra (10) à l'aide de paramètres de caméra virtuelle (70) des caractéristiques associées aux meilleures correspondances.

9. Module d'étalonnage de caméra (50) selon la revendication 8, l'image d'étalonnage numérique (20) étant asymétrique dans au moins une dimension.

10. Module d'étalonnage de caméra (50) selon la revendication 8, les paramètres extrinsèques et les paramètres de caméra virtuelle (70) comprenant des coordonnées de translation et de rotation.

11. Module d'étalonnage de caméra (50) selon la revendication 8, la pluralité de vues synthétiques (60, 100) étant sélectionnée dans un espace de paramètres de la caméra virtuelle (70), où l'image d'étalonnage se trouve au sein d'un champ de vue de la vue synthétique.

12. Module d'étalonnage de caméra (50) selon la revendication 8, le module de correspondance des caractéristiques (53) étant configuré pour identifier une meilleure correspondance en calculant la différence par éléments entre chaque caractéristique et en minimisant cette différence à la fois pour la vue synthétique sur l'image capturée et pour l'image capturée sur la vue synthétique.

13. Module d'étalonnage de caméra (50) selon la revendication 8, l'identification de l'ensemble de caractéristiques de l'image de la caméra numérique étant effectuée uniquement sur une zone d'intérêt de l'image de la caméra numérique.

14. Système d'étalonnage de caméra comprenant :
le module d'étalonnage de caméra (50) selon la revendication 8 ;
la caméra (10) ; et
le motif d'étalonnage planaire physique (30) ;
la sortie de la caméra étant intégrée avec la translation et la rotation de la caméra (10).
